# EUROPEAN PATENT SPECIFICATION

(11) **EP 3 876 195 B1**
(45) Date of publication and mention of the grant of the patent: **02.07.2025**
(21) Application number: 21154727.8
(22) Date of filing: 02.02.2021
(51) Int. Cl.: G06T 7/00, G06T 7/12

(54) **IMAGE PROCESSOR AND METHOD FOR EVALUATING DYEING QUALITY OF KNIT FABRIC**
BILDPROZESSOR UND VERFAHREN ZUR BEWERTUNG DER EINFÄRBEQUALITÄT VON STRICKWAREN
PROCESSEUR D'IMAGES ET PROCÉDÉ D'ÉVALUATION DE LA QUALITÉ DE TEINTURE DE TISSU TRICOTÉ

(30) Priority: 04.03.2020 JP 2020036464
(43) Date of publication of application: 08.09.2021
(73) Proprietor: TMT Machinery, Inc., Osaka-shi, Osaka 541-0041 (JP)
(72) Inventor: Kawamoto, Kazuhiro, Kyoto, 612-8686 (JP); Hashimoto, Kinzo, Kyoto, 612-8686 (JP)
(74) Representative: Hoffmann Eitle

(56) References cited:
- EP-A1- 3 361 444
- KR-B1- 101 289 473
- US-A1- 2002 109 112
- HENRY Y T NGAN ET AL: "Automated fabric defect detection A review", IMAGE AND VISION COMPUTING, ELSEVIER, GUILDFORD, GB, vol. 29, no. 7, 27 February 2011 (2011-02-27), pages 442 - 458, XP028221701, ISSN: 0262-8856, [retrieved on 20110324], DOI: 10.1016/J.IMAVIS.2011.02.002

## Description

### BACKGROUND OF THE INVENTION

The present invention relates to an image processor configured to extract an uneven area corresponding to uneven dyeing from an image which is obtained by capturing an image of a dyed knit fabric, and a method for evaluating the dyeing quality of the knit fabric based on the uneven area extracted by the image processor.

When a synthetic fiber yarn made of polyester and the like is dyed, uneven dyeing may unintentionally occur. In this regard, unevenness in oriented molecular crystals occurs at the time of producing or processing the yarn, with the result that the easiness in the infiltration of stain differs depending on the place. This may cause the above-described uneven dyeing. The uneven dyeing has a large effect on the product value of the yarn. Therefore, a test for evaluating the dyeing quality of the yarn in advance is conventionally carried out. To be more specific, after dyeing a knitted sample obtained by knitting a yarn which is an evaluation target into a cylindrical shape, the dyeing quality of this yarn is evaluated based on the uneven dyeing occurring on the sample.

This test is visually performed by an evaluator, but the evaluation result may differ depending on the evaluator. Even when the same evaluator visually performs the evaluation again after a time, the evaluation result may change. In order to reduce the unevenness of the evaluation result, automatic evaluation of the dyeing quality has been tried. This automatic evaluation is performed by capturing an image of a dyed knitted-sample with a camera and by analyzing the image. In connection with this, for example, Patent Literature 1 (Japanese Laid-Open Patent Publication No. 2015-212924) proposes a technique for removing a mesh pattern from the image showing the knitted sample so that the detection of the uneven dyeing from the captured image is facilitated. US2002109112 A1 relates to several smart cameras for detecting web flaws, each smart camera includes a web edge detector for monitoring the edges of a web, a multi-pipeline flaw detection pre-processor for detecting very small changes in the web material, a 2D blob detector and analyzer for generating data regarding the location of block flaws along a machine direction, and an inspect/reject analysis for determining the actual flaw data from the potential flaw data.

### SUMMARY OF THE INVENTION

At the time of knitting, after a loop is formed by one yarn in a course direction, another loop is formed by hooking the yarn onto the former loop in a wale direction. The uneven dyeing may tend to continuously occur in the length direction of a yarn. Therefore, when a knitted sample is dyed, the uneven dyeing occurs as a long and narrow area extending in the course direction. When the dyeing quality is evaluated based on the above-described uneven dyeing, an evaluator comprehensively and sensorily performs an evaluation in consideration of several factors such as the length of uneven areas, the number of uneven areas, and the depth of uneven areas. For this reason, it is difficult to allow the evaluation result obtained by the image analysis to match to the evaluation result obtained by the visual evaluation of the evaluator in a case in which the dyeing quality is evaluated by automatically analyzing an image of the knitted sample.

In consideration of the above-described problem which occurs when the dyeing quality of the knit fabric is evaluated by analyzing the image of a dyed knit fabric, an object of the present invention is to allow the evaluation result obtained by the image analysis to match to an evaluation result obtained by the visual evaluation of an evaluator.

According to the present invention, an image processor is configured according to claim 1.

The uneven dyeing can be recognized as a part in which the contrast is high in the captured image. However, when the high-contrast area was simply extracted, the dyeing quality was not correctly evaluated because the unevenness (e.g., unevenness due to scratches generated at the time of knitting the knit fabric) which is not the uneven dyeing due to the unevenness in oriented molecular crystals of a yarn was also extracted. In the present invention, after the first extracting process of extracting the high-contrast area, the second extracting process of extracting only the area, in which the aspect ratio is high, as the uneven area from among the high-contrast area which has been extracted is performed. By performing the second extracting process, the uneven area corresponding to the actual uneven dyeing which is long and narrow and which extends in the course direction is accurately extracted. As a result, it became possible to allow the evaluation result obtained by the image analysis to match to the evaluation result obtained by the visual evaluation of the evaluator.

In the present invention, preferably, in the second extracting process, an area in which the aspect ratio is equal to or higher than a first predetermined value and in which a size of the area in the wale direction is within a predetermined range is extracted as the at least one uneven area from among the at least one high-contrast area.

By adding the size of the area in the wale direction to the extraction condition of the uneven area, the narrowness of the actual uneven dyeing is also taken into account. The extraction accuracy of the uneven area is therefore increased.

In the present invention, after the second extracting process, two or more of the at least one uneven area, in which a distance between the two or more of the at least one uneven area in the wale direction is equal to or less than a second predetermined value and in which a distance between the two or more of the at least one uneven area in the course direction is equal to or less than a third predetermined value are connected with one another.

In the image processing, one uneven area may be fragmented and separated into several uneven areas. In this regard, by connecting the uneven areas under the predetermined conditions as described above, the separated uneven areas can be connected with one another.

In the present invention, preferably, among the at least one high-contrast area, an area in which a size of the area in an X-axial direction of the image is equal to or less than a fourth predetermined value is deleted before the second extracting process.

As such, the small noise generated at the time of the image processing is removed.

In the present invention, before the second extracting process, the image is corrected so that the course direction of the knit fabric shown in the image is parallel to an X-axis of the image.

Generally, because the course direction of the knit fabric and the camera are adjusted to be horizontal at the time of capturing the knit fabric, the course direction of the knit fabric shown in the image and the X-axis of the image are parallel to each other. However, the course direction may be inclined with respect to the X-axis due to the error at the time of the arrangement, etc. Therefore, such an inclination is solved by performing the above-described correction.

In the present invention, preferably, the image is converted to grayscale before the edge detecting process.

By converting the image to grayscale, an obscure edge due to an effect of color is avoided in the edge detecting process. In addition to that, the processing load in the subsequent steps of the image processing is reduced.

In the present invention, preferably, a mesh pattern in the image is removed before the edge detecting process.

Because of this, the influence of the mesh pattern is reduced so that the uneven area is preferably extracted.

In the present invention, preferably, the image is smoothed before the edge detecting process.

By smoothing the image, the noise included in the captured image is removed. Especially, by performing the smoothing after removing the mesh pattern, the remaining part of the mesh pattern which has not been removed is reduced.

According to an embodiment of the present invention, a method for evaluating dyeing quality of knit fabric, evaluating the dyeing quality of the knit fabric is based on the at least one uneven area which is extracted by the above-described image processor.

The extraction, which is performed by the above-described image processor, of the uneven area is performed in consideration of the actual uneven dyeing. It is therefore possible to allow the evaluation result obtained by the image analysis to match to the evaluation result obtained by a known visual evaluation performed by the evaluator in such a way that the dyeing quality of the knit fabric is evaluated based on the uneven area which has been extracted.

In the present invention, preferably, the dyeing quality of the knit fabric is evaluated based on a ratio of a width, the ratio being a ratio of a size of the at least one uneven area in the course direction with respect to a size of the knit fabric in the course direction.

When the dyeing quality of the knit fabric is evaluated, the evaluation close to the evaluation which is sensorily performed by the evaluator is performed in such a way that the length of the uneven area with respect to the entire length of the knit fabric is taken into account as described above.

To be specific, preferably, the dyeing quality of the knit fabric is evaluated based on an average value of the ratio of the width of the at least one uneven area.

Alternatively, the dyeing quality of the knit fabric may be evaluated based on a standard deviation of the ratio of the width of the at least one uneven area.

Alternatively, the dyeing quality of the knit fabric may be evaluated based on the number of areas in which the ratio of the width is equal to or higher than a fifth predetermined value, among the at least one uneven area.

### BRIEF DESCRIPTION OF THE DRAWINGS

FIG. 1 is a schematic diagram of a test facility for evaluating the dyeing quality of a knitted-sample.
FIG. 2 is an enlarged schematic diagram showing a part of the knitted sample.
FIG. 3 is a flowchart of a series of steps performed by an image processor.
FIG. 4 is a flowchart of a series of steps performed by the image processor.
FIGs. 5(a) to 5(d) are images for each of which the corresponding step of image processing was performed.
FIGs. 6(a) and 6(b) are figures used for explaining how to determine the upper limit value of a gradient of an edge.
FIGs. 7(a) to 7(c) show high-contrast areas extracted from an image of each sample.
FIGs. 8(a) to 8(c) show areas which are extracted from the image of each sample and in which an aspect ratio is equal to or higher than a predetermined value.
FIGs. 9(a) to 9(c) show connected points at each of which uneven areas are connected with one another in the same images shown in FIG. 8.
FIGs. 10(a) to 10(c) are histograms each showing the relationship between the ratio of the width of each uneven area and the number of the uneven areas.
FIG. 11 is a table in which the evaluation value obtained by visual evaluation is compared to each numeral value regarding the ratio of the width of the uneven area.

### DESCRIPTION OF THE PREFERRED EMBODIMENTS

### (Outline of Test Facility)

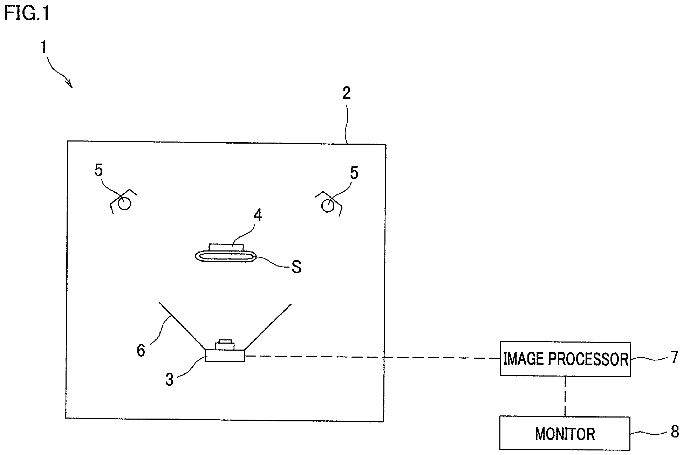

The following will describe an embodiment of the present invention with reference to figures. FIG. 1 is a schematic diagram of a test facility for evaluating the dyeing quality of a knitted-sample. In the test facility 1, an uneven area corresponding to the actual uneven dyeing is extracted by capturing an image of a knitted sample S (knit fabric of the present invention) with a camera 3 and by performing image processing for the captured image with an image processor 7, and then the dyeing quality of the knitted-sample S is evaluated.

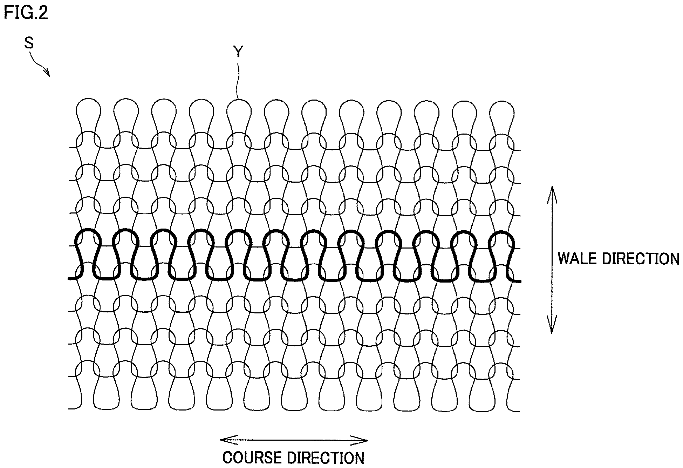

The knitted sample S will be described first. FIG. 2 is an enlarged schematic diagram showing a part of the knitted sample S. For example, the knitted sample S is a dyed knit fabric obtained by knitting a synthetic fiber yarn Y made of polyester into a cylindrical shape. The knitted sample S is structured in such a way that, after a loop is formed by one yarn Y in a course direction (transverse direction), another loop is formed by hooking the yarn Y onto the former loop in a wale direction (vertical direction orthogonal to the course direction). Typically, uneven dyeing continuously occurs in the yarn Y in a length direction of the yarn **Y.** Therefore, at the time of dyeing the knitted sample S, the uneven dyeing occurs as a long and narrow area extending in the course direction as indicated by a bold line shown in FIG. **2****.**

Referring back to FIG. 1, the test facility 1 will be described. The test facility 1 includes the camera 3, **a** supporter **4,** two lights **5,** a reflector **6,** the image processor 7, and a monitor 8. The camera 3, the supporter 4, the two lights **5,** and the reflector 6 are provided in a photo darkroom **2.** The cylindrical-shaped knitted sample S is supported by the supporter 4 provided on a central portion of the photo darkroom 2 so that the opening faces upward and downward, **i.e.,** so that the course direction is horizontal.

The camera 3 is provided to be horizontal in front of the supporter 4. With this arrangement, the camera 3 is able to capture an image of a front surface of the knitted sample S so that the course direction of the knitted sample S is substantially parallel to an X-axis of the captured image. The size of the knitted sample S shown in the image is always constant in such a way that the image is captured after setting the magnification ratio of the camera 3 and the distance between the camera 3 and the knitted sample S into respective predetermined values. In the present embodiment, the magnification ratio of the camera 3 and the distance between the camera 3 and the knitted sample S are set so that the size of the knitted sample S shown in the image is about 2056 pixels in the X-axial direction.

The two lights 5 are provided behind the supporter **4,** and provided in a left-right symmetrical manner so as to sandwich the supporter **4.** Each of the two lights 5 is positioned on the straight line which is tilted at about 45 degrees from the straight line connecting the camera 3 to the supporter 4 and which passes the camera **3.** The reflector 6 is provided in the vicinity of the camera 3 so that the light from the two lights 5 is reflected toward the knitted sample **S.** Because of this, the front surface of the knitted sample S has the brightness suitable for being captured.

The image processor 7 is structured by members such as a CPU, a memory, and a hard disk. The image processor 7 is electrically connected to the camera **3,** and is able to take in image data of the knitted sample S which has been captured by the camera **3.** The image processor 7 extracts the uneven area corresponding to the actual uneven dyeing from the captured image in such a way that a predetermined image processing is performed for the image of the knitted sample S which has been captured by the camera **3.** Subsequently, the image processor 7 evaluates the dyeing quality of the knitted-sample S based on the uneven area which has been extracted. The monitor 8 is connected to the image processor 7. On the monitor 8, the image of the knitted sample S and the evaluation result regarding the dyeing quality of the knitted-sample S, etc., are displayed.

### (Extraction of Uneven Area and Evaluation of Dyeing Quality)

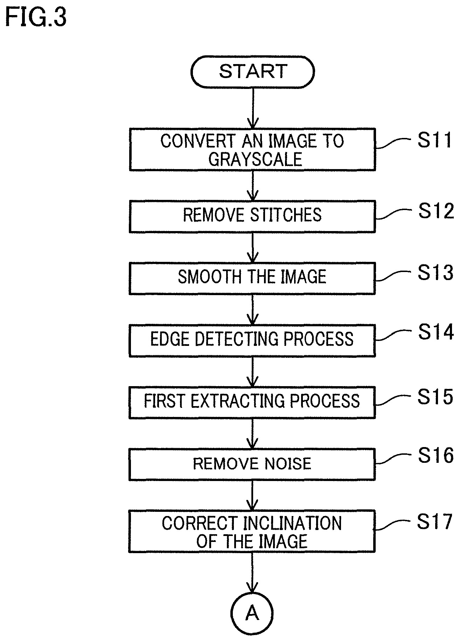

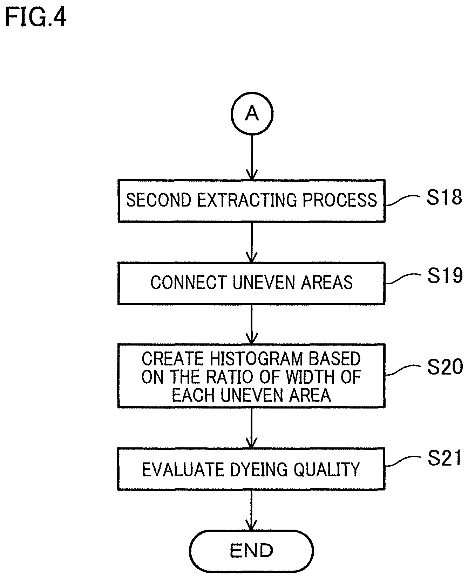

The following will describe the extraction of the uneven area and the evaluation of the dyeing quality which are performed by the image processor 7. FIG. 3 and FIG. 4 are flowcharts each showing a series of steps performed by the image processor 7. The image processor 7 takes in the image data of the knitted sample S which has been captured by the camera **3,** and converts the image to grayscale (step S11). The speed of a calculation process is increased by performing the image processing with the use of the image which has been converted to grayscale. In addition to that, an obscure edge due to an effect of color is avoided at the time of the edge detecting process performed in a step S14. However, converting the image to grayscale is not prerequisite. The image processing may be advanced without converting a color image to grayscale.

Subsequently, the image processor 7 removes a mesh pattern from the image which has been converted to grayscale (step S12). To remove the mesh pattern, for example, the technique described in Japanese Laid-Open Patent Publication No. 2015-212924 may be adopted. Specifically, the period information having the number of repetitions, which is equal to or higher than a value aN obtained by multiplying the number of repetitions N (known number) by a predetermined coefficient a, is removed by a low-pass filter. In this regard, the number of repetitions N is the number of repetitions of the loops per an unit length. The coefficient a is a value within the range of, e.g., 0.7 to **0.9.** In the present embodiment, the coefficient a is 0.85. However, the method of removing the mesh pattern is not limited to this. Another method may be adopted.

Subsequently, the image processor 7 smooths the image from which the mesh pattern has been removed (step S13). The smoothing is performed for removing the small noise due to the remaining part of the mesh pattern which has not been removed in the step S12. For the smoothing, for example, a known Wiener filter can be used. The size of the filter is, e.g., 5 to 25 pixels × 10 to 60 pixels. In the present embodiment, the size of the filter is 12 pixels × 18 pixels or 15 pixels × 40 pixels. However, the type of the filter and the size of the filter are not limited to these.

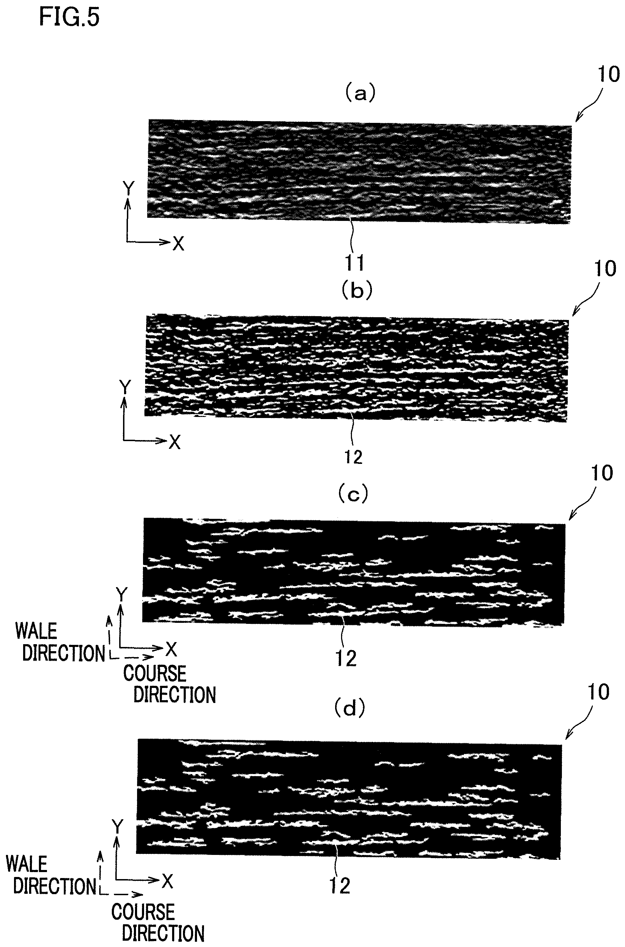

Subsequently, the image processor 7 performs the edge detecting process for the image which has been smoothed (step S14). The edge detecting process is performed for detecting a point (edge) at which brightness is drastically changed in the image. For the edge detecting process, for example, a known Prewitt filter can be used. The size of the filter is, e.g., 3 pixels × 3 pixels. However, the type of the filter and the size of the filter are not limited to these. FIG. 5(a) is one of images 10 in which an edge 11 were detected by the edge detecting process. As shown in FIGs. 5(a) to 5(d), the transverse direction of the images 10 is defined as the X-axial direction and the vertical direction of the images 10 is defined as a Y-axial direction.

Subsequently, the image processor 7 performs a first extracting process for the image 10 for which the edge detecting process has been performed (step S15). In the first extracting process, high-contrast areas 12 in each of which the gradient (inclination of the brightness) of the edge 11 is equal to or higher than a predetermined value are extracted. To be more specific, a binarization process in which the predetermined value is used as a threshold is performed for the image 10 in which the edge 11 has been detected, and pixels in which the gradient of the edge 11 is equal to or higher than the threshold are shown in white and pixels in which the gradient of the edge 11 is less than the threshold are shown in black. FIG. 5(b) is the image in which the high-contrast areas 12 are extracted and shown in white in the image 10 of FIG. 5(a).

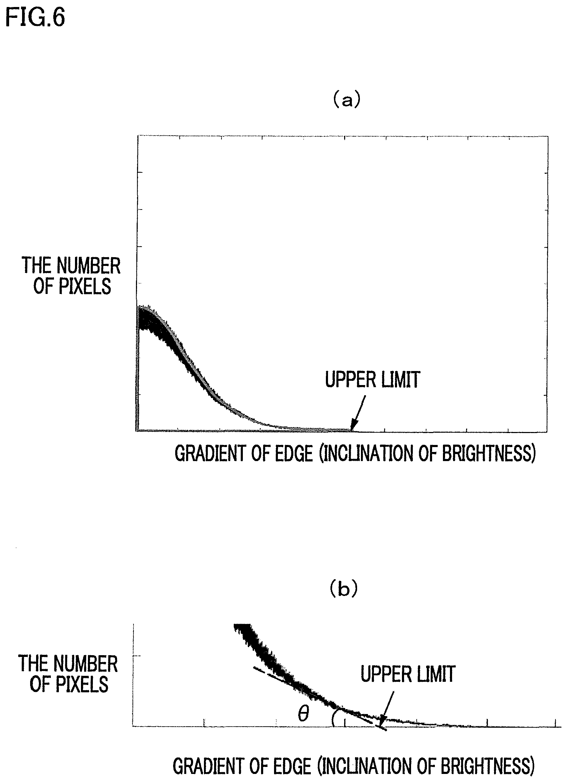

The way of determining the above-described predetermined value in the first extracting process will be described with reference to FIGs. 6(a) and 6(b). To begin with, regarding the image 10 for which the edge detecting process has been performed, a histogram in which the gradient of the edge 11 is taken as the transverse axis and the number of the pixels is taken as the vertical axis is created as shown in FIG. 6(a). Then, an upper limit value U of the gradient of the edge 11 is calculated from this histogram, and a value bU obtained by multiplying the upper limit value U by a predetermined coefficient b is used as the above-described predetermined value, i.e., the threshold of the binarization process. The coefficient b is a value within the range of, e.g., 0. 15 to 0.5. In the present embodiment, the coefficient b is 0.25.

When a lower portion of the histogram is long toward the right, the upper limit value U may be approximately calculated as below. FIG. 6(b) is an enlarged view showing the vicinity of the lower portion of FIG. 6(a). As indicated by a broken line in FIG. 6(b), a line approximation between a predetermined area of the lower portion of the histogram is calculated, and then an angle θ formed between the straight line of this line approximation and the axis of the transverse axis of the histogram is calculated. When this angle θ is a predetermined angle, an intersection of the straight line of the line approximation and the axis of the transverse axis of the histogram may be used as the upper limit value U. The predetermined angle is an angle within the range of, e.g., 5 to 30 degrees. In the present embodiment, the predetermined angle is 25 degrees. However, the way of approximately calculating the upper limit value U is not limited to this.

Referring back to FIG. 3, the remaining steps of the flowchart will be described. After the first extracting process, among the high-contrast areas 12 which have been extracted in the first extracting process, the image processor 7 deletes areas in each of which the size of the area in the X-axial direction is a predetermined value or less so as to remove the noise (step S16). The above-described predetermined value is, e.g., 100 pixels, and may be suitably changed. As such, the small noise generated by the binarization process is removed. FIG. 5(c) is the image in which the small noise was removed from the image 10 of FIG. 5(b).

Subsequently, when the course direction of the knitted sample S shown in the image 10 is inclined with respect to the X-axis of the image 10, the image processor 7 corrects the inclination of the image 10 so that the course direction is parallel to the X-axis (step S17). To be more specific, inclinations of some of the high-contrast areas 12 may be calculated by the least-squares method, and then the image 10 may be rotated in accordance with the average value of the calculated inclinations. As described above, the capture of the knitted sample S is performed so that the course direction is substantially parallel to the X-axis. However, the course direction is sometimes inclined with respect to the X-axis by an error. The correction is therefore carried out. FIG. 5(d) is the image in which the inclination of the image 10 of FIG. 5(c) was corrected.

Subsequently, the image processor 7 performs a second extracting process for the image 10 in which the inclination of the image 10 has been corrected (step S18). In the second extracting process, among the high-contrast areas 12, areas each of which has the tendency of the actual uneven dyeing which is long and narrow and which extends in the course direction are extracted as uneven areas 13. To be more specific, the high-contrast areas 12 each of which meets both of a first condition and a second condition are extracted as the uneven areas 13. In the first condition, the aspect ratio which is the ratio of the size of the high-contrast area 12 in the course direction with respect to the size of the high-contrast area 12 in the wale direction is equal to or higher than a predetermined value. In the second direction, the size of the high-contrast area 12 in the wale direction is within a predetermined range.

In the present embodiment, because the inclination of the image 10 has been corrected in the step S17 so that the course direction is parallel to the X-axis, the aspect ratio in the first condition is calculatable by dividing the size of the high-contrast area 12 in the X-axial direction by the size of the high-contrast area 12 in the Y-axial direction. The above-described predetermined value of the aspect ratio may be arranged to be equal to or higher than, e.g., four. In the present embodiment, the above-described predetermined value of the aspect ratio is seven. The size, which is related to the second condition, of the high-contrast area 12 in the wale direction is identical with the size of the high-contrast area 12 in the Y-axial direction. The above-described predetermined range of the size of the high-contrast area 12 in the wale direction is a range between, e.g., 10 to 60 pixels. In the present embodiment, the above-described predetermined range is 17 to 47 pixels. In this regard, the specific values related to the first condition and the second condition may be suitably changed. By extracting the uneven areas 13 from among the high-contrast areas 12 based on the first condition and the second condition, it is possible to accurately extract unevenness which corresponds to the actual uneven dyeing and which is long and narrow in the course direction.

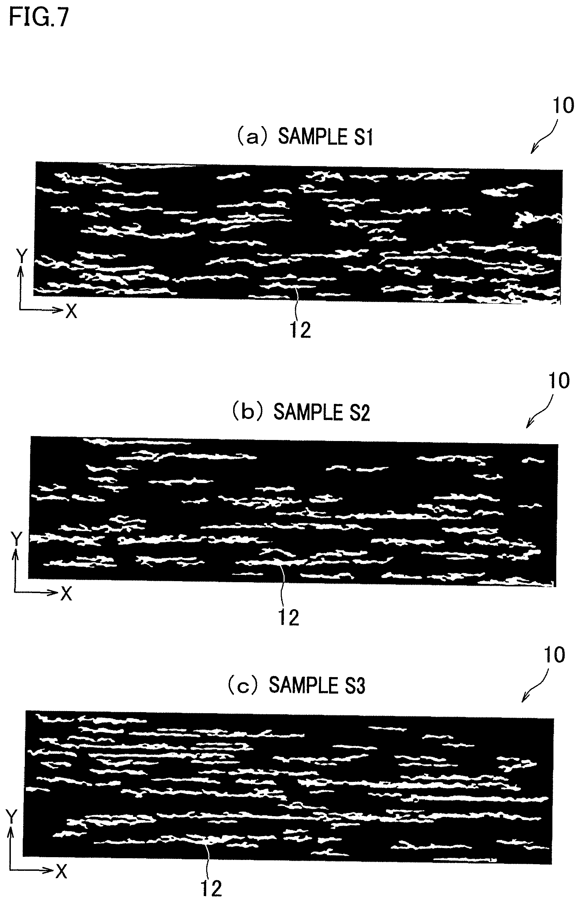

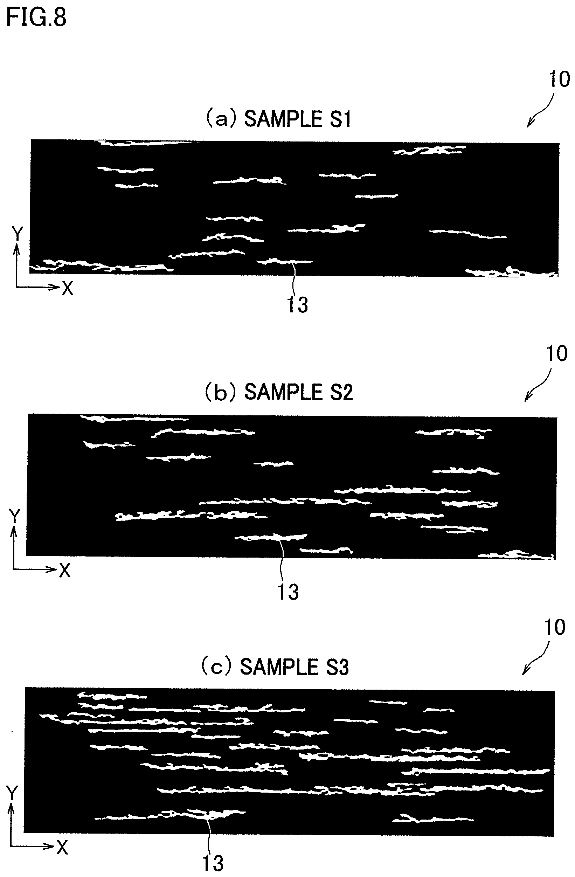

FIGs. 7(a) to 7(c) show the high-contrast areas 12 extracted from an image in which each of three knitted samples S (samples S1 to S3) is captured and in which the inclination of the image is corrected. FIGs. 8(a) to 8(c) show the uneven areas 13 extracted from an image of each of the samples S1 to S3, i.e., are images obtained by performing the second extracting process for the images 10 shown in FIGs. 7(a) to 7(c). As shown in the comparison between FIGs. 7(a) to 7(c) and FIGs. 8(a) to 8(c), by performing the second extracting process, the high-contrast areas 12 each of which is too short or thick and does not have the tendency of the actual uneven dyeing have been deleted. As a result, high-contrast areas 12 each of which is long and narrow and extends linearly in the course direction (X-axial direction) have been extracted as the uneven areas 13.

Subsequently, the image processor 7 connects two or more uneven areas 13 in which the distance between the uneven areas 13 in the wale direction is equal to or less than a predetermined value and in which the distance between the uneven areas 13 in the course direction is equal to or less than a predetermined value, with each other (step S19). To be more specific, regarding the distance between the uneven areas 13 in the wale direction, whether an absolute value of the difference between the Y-coordinates of the gravity centers of two uneven areas 13 is equal to or less than a value (10 pixels in the present embodiment) between, e.g., 5 to 25 pixels is determined. In addition to that, regarding the distance between the uneven areas 13 in the course direction, whether an absolute value of the difference between the X-coordinates of opposing ends of two adjacent uneven areas 13 is equal to or less than a value (100 pixels in the present embodiment) between, e.g., 3 to 20 % of the size of the knitted sample S in the X-axial direction is determined. In this regard, the ends of two uneven areas 13 are adjacent to each other.

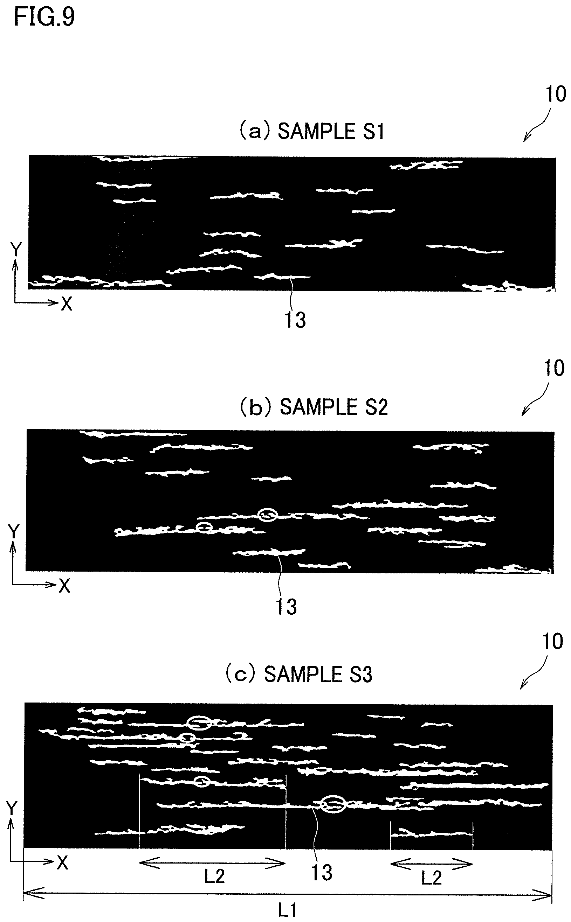

Whether two or more uneven areas 13 are connected with one another and regarded as one uneven area 13 is just determined by a calculation, and an image in which the uneven areas 13 have been connected with one another is not actually created. In the present embodiment, the uneven areas 13 which are adjacent to one another at the point surrounded by each circle in FIG. 9(a) to 9(c) are connected with one another and regarded as one uneven area 13. In the below-described evaluation of the dyeing qualities of the samples S1 to S3, two or more uneven areas 13 which have been connected with one another are regarded as one long uneven area 13.

Subsequently, in order to evaluate the dyeing qualities of the samples S1 to S3, the image processor 7 creates a histogram regarding the ratio of the width of each uneven area 13 which has been extracted (step S20).

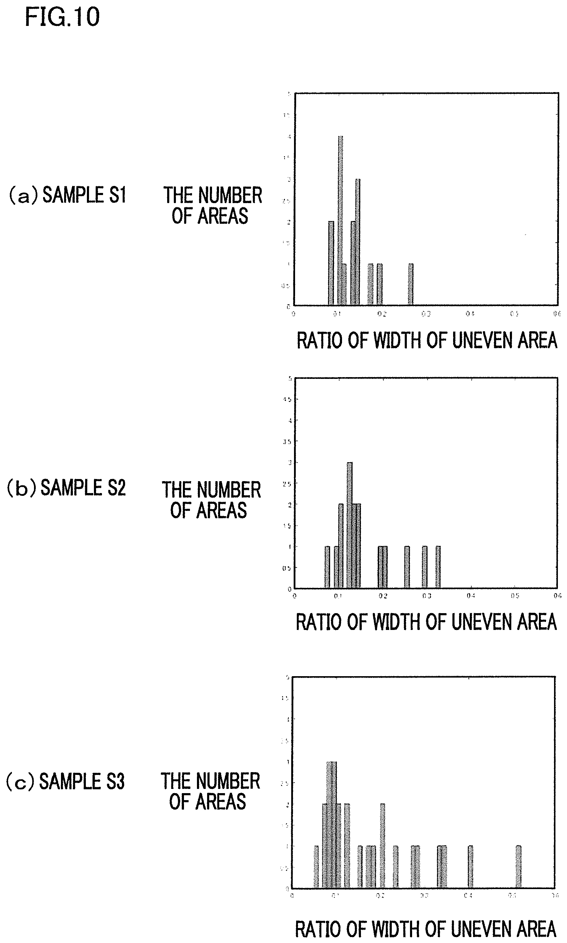

FIGs. 10(a) to 10(c) are histograms each showing a relationship between the ratio of the width of each uneven area 13 and the number of the uneven areas 13. As shown in FIG. 9(c), the ratio of the width means a ratio L2/L1 of the size L2 of the uneven area 13 in the course direction with respect to the size L1 of the knitted sample S shown in the image 10 in the course direction. Regarding each of the uneven areas 13 which have been connected in the step S19, the size of each uneven area 13 in which the connection is completed is regarded as the size L2. The image processor 7 evaluates the dyeing qualities of the samples S1 to S3 based on the occurrence frequency of each class of the ratio of the width (step S21). The image processor 7 may not actually create the graphs as shown in FIGs. 10(a) to 10(c), and may be differently arranged as long as it stores the information regarding the ratio of the width in the memory.

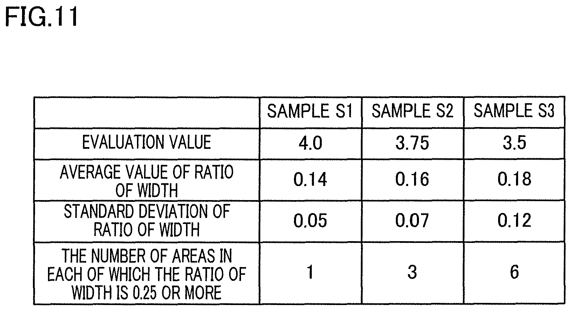

FIG. 11 is a table in which the evaluation value obtained by visual evaluation is compared to each numeral value regarding the ratio of the width of the uneven area 13. When the dyeing qualities of the samples S1 to S3 were visually evaluated by the evaluator on a scale to 4.5 used as full marks (The higher the scale is, the higher the quality is), the sample S1 was evaluated as 4.0 out of 4.5, the sample S2 was evaluated as 3.75 out of 4.5, and the sample S3 was evaluated as 3.5 out of 4.5. Meanwhile, regarding the uneven areas 13 which had been extracted by the image processor 7 from the captured images S1 to S3, an average value of the ratio of the width, a standard deviation of the ratio of the width, and the number of the areas in each of which the ratio of the width was 0.25 or more were calculated. In this regard, the threshold 0.25 may be suitably changed.

Firstly, the high average value of the ratio of the width means that the average length of each extracted uneven area 13 is long. It is therefore assumed that the average value of the ratio of the width is large when the evaluation value obtained by the visual evaluation is low. Such result was actually obtained. Secondly, the wide standard deviation of the ratio of the width means that the distribution of the ratio of the width reaches high values and that there is an uneven area 13 in which the ratio of the width is large. It is therefore assumed that the standard deviation of the ratio of the width is large when the evaluation value obtained by the visual evaluation is low. Such result was actually obtained. Finally, the large number of the areas, in each of which the ratio of the width is 0.25 or more, means that the number of the long uneven areas 13 extending in the course direction is large. It is therefore assumed that the number of the areas, in each of which the ratio of the width is 0.25 or more, is large when the evaluation value obtained by the visual evaluation is low. Such result was actually obtained.

As such, regarding the uneven areas 13 which had been extracted, when the average value of the ratio of the width, the standard deviation of the ratio of the width, and the number of the areas in each of which the ratio of the width was 0.25 or more were used as evaluation items, each item had a favorable correlation with the evaluation value obtained by the visual evaluation. It is therefore possible to allow the evaluation value obtained by the image analysis to match to the evaluation value obtained by the visual evaluation in such a way that the dyeing quality of the knitted sample S is evaluated with one of these evaluation items or a combination of two or more items of these evaluation items. The image processor 7 completes a series of the steps by, e.g., evaluating the dyeing quality of the knitted sample S with one of the above-described evaluation items or a combination of two or more items of the above-described evaluation items and by displaying the evaluation result on the monitor 8.

### (Effects)

The image processor 7 of the present embodiment performs the edge detecting process of detecting the edge 11 included in the image 10 of the knitted sample S, the first extracting process of extracting the high-contrast areas 12 in each of which the gradient of the edge 11 is equal to or higher than a predetermined value, and the second extracting process of extracting the areas in each of which the aspect ratio is equal to or higher than a predetermined value as the uneven areas 13 from among the high-contrast areas 12. The uneven dyeing can be recognized as a part in which the contrast is high in the captured image. However, when the high-contrast areas 12 were simply extracted, the dyeing quality was not correctly evaluated because the unevenness (e.g., unevenness due to scratches generated at the time of knitting the knitted sample S) which is not the uneven dyeing due to the unevenness in oriented molecular crystals of a yarn Y was also extracted. Therefore, after the first extracting process of extracting the high-contrast areas 12, the second extracting process in which only the areas, in each of which the aspect ratio is high, are extracted as the uneven areas 13 from among the high-contrast areas 12 which have been extracted is performed. By performing the second extracting process, the uneven areas 13 each corresponding to the actual uneven dyeing which is long and narrow and which extends in the course direction are accurately extracted. As a result, it became possible to allow the evaluation result obtained by the image analysis to match to the evaluation result obtained by the visual evaluation of the evaluator.

In the present embodiment, in the second extracting process, each area in which the aspect ratio is equal to or higher than a predetermined value and in which the size in the wale direction is within a predetermined range is extracted as the uneven area 13 from among the high-contrast areas 12. By adding the size of the area in the wale direction to the extraction condition of the uneven area 13, the narrowness of the actual uneven dyeing is also taken into account. The extraction accuracy of the uneven area 13 is therefore increased.

In the present embodiment, after performing the second extracting process, two or more uneven areas 13 in which the distance between them in the wale direction is equal to or less than a predetermined value and in which the distance between them in the course direction is equal to or less than the predetermined value are connected with one another. In the image processing, one uneven area 13 may be fragmented and separated into several uneven areas 13. In this regard, by connecting the uneven areas 13 under the predetermined conditions as described above, the separated uneven areas 13 can be connected with one another.

In the present embodiment, among the high-contrast areas 12, the areas in each of which the size of the area in the X-axial direction of each image 10 is equal to or less than a predetermined value are deleted before performing the second extracting process. As such, the small noise generated at the time of the image processing is removed.

In the present embodiment, before performing the second extracting process, the image 10 is corrected so that the course direction of the knitted sample S shown in the image 10 is parallel to the X-axis of the image 10. Generally, because the course direction of the knitted sample S and the camera 3 are adjusted to be horizontal at the time of capturing the knitted sample S, the course direction of the knitted sample S shown in the image 10 and the X-axis of the image 10 are parallel to each other. However, the course direction may be inclined with respect to the X-axis due to the error at the time of the arrangement, etc. Therefore, such an inclination is solved by performing the above-described correction.

In the present embodiment, the image 10 is converted to grayscale before performing the edge detecting process. By converting the image to grayscale, an obscure edge due to an effect of color is avoided in the edge detecting process. In addition to that, the processing load in the subsequent steps of the image processing is reduced.

In the present embodiment, the mesh pattern shown in the image 10 is removed before performing the edge detecting process. Because of this, the influence of the mesh pattern is reduced so that the uneven areas 13 are preferably extracted.

In the present embodiment, the image 10 is smoothed before performing the edge detecting process. By smoothing the image 10, the noise included in the captured image 10 is removed. Especially, by performing the smoothing after removing the mesh pattern, the remaining part of the mesh pattern which has not been removed is reduced.

In the present embodiment, the dyeing quality of the knitted sample S is evaluated based on the uneven areas 13 which have been extracted by the image processor 7. The extraction, which is performed by the image processor 7, of the uneven areas 13 is performed in consideration of the actual uneven dyeing. It is therefore possible to allow the evaluation result obtained by the image analysis to match to the evaluation result obtained by a known visual evaluation which is performed by the evaluator, in such a way that the dyeing quality of the knitted sample S is evaluated based on the extracted uneven areas 13.

In the present embodiment, the dyeing quality of the knitted sample S is evaluated based on the ratio of the width, **i.e.,** the ratio L2/L1 which is the ratio of the size L2 of each uneven area 13 in the course direction with respect to the size L1 of the knitted sample S in the course direction. When the dyeing quality of the knitted sample S is evaluated, the evaluation close to the evaluation which is sensorily performed by the evaluator is performed in such a way that the length of the uneven area 13 with respect to the entire length of the knitted sample S is taken into account as described above.

### (Other Embodiments)

The following will describe modifications of the above-described embodiment.

In the embodiment above, as the method of evaluating the dyeing quality of the knitted sample S, the ratio of the width of each uneven area which has been extracted by the image processor 7 is calculated, and at least one of the average value of the ratio of the width, the standard deviation of the ratio of the width, and the number of the uneven areas in each of which the ratio of the width is 0. 25 or more is used as the evaluation item. However, the evaluation items are not limited to these. An index which is not the ratio of the width may be used.

In the embodiment above, the first condition regarding the aspect ratio and the second condition regarding the size in the wale direction are imposed in the second extracting process. However, the second condition may be omitted as long as each uneven area corresponding to the actual uneven dyeing is preferably extracted only based on the aspect ratio. Alternatively, a condition which is not related to the size in the wale direction may be used in combination of the condition regarding the aspect ratio.

In the embodiment above, the steps S11 to S19 of the image processing are performed for the captured image of the knitted sample S. Of these, prerequisite steps of the present invention are the edge detecting process (step S14), the first extracting process (step S15), and the second extracting process (step S18). The steps except the steps S14, S15, and S18 may be omitted in accordance with the conditions, or may be replaced with other steps.

In the embodiment above, the image processor 7 automatically performs the evaluation of the dyeing quality in the step S21 after performing a series of the steps of the image processing. Alternatively, a final evaluation of the dyeing quality may be performed by the evaluator. For example, the image processor 7 may complete the operation by displaying the histograms shown in FIG. 10(a) to 10(c) on the monitor 8 and the evaluator may perform the final evaluation of the dyeing quality based on the histograms.

## Claims

1. An image processor (7) configured to extract at least one uneven area corresponding to uneven dyeing from an image (10) of a dyed knit fabric (S), the image processor (7) performing:
an edge detecting process of detecting an edge (11) included in the image (10);
a first extracting process of extracting at least one high-contrast area (12) in which a gradient of the edge (11) is equal to or higher than a predetermined value; and
a second extracting process of extracting an area in which an aspect ratio is equal to or higher than a first predetermined value as the at least one uneven area (13) from among the at least one high-contrast area (12), the aspect ratio being a ratio of a size of the area in a course direction with respect to a size of the area in a wale direction, wherein
after the second extracting process, two or more of the at least one uneven area (13), in which a distance between the two or more of the at least one uneven area (13) in the wale direction is equal to or less than a second predetermined value and in which a distance between the two or more of the at least one uneven area (13) in the course direction is equal to or less than a third predetermined value are connected with one another, and/or wherein
before the second extracting process, the image (10) is corrected so that the course direction of the knit fabric (S) shown in the image (10) is parallel to an X-axis of the image (10).

2. The image processor (7) according to claim 1, wherein, in the second extracting process, an area in which the aspect ratio is equal to or higher than the first predetermined value and in which a size of the area in the wale direction is within a predetermined range is extracted as the at least one uneven area (13) from among the at least one high-contrast area (12).

3. The image processor (7) according to any one of claim 1 or 2, wherein, among the at least one high-contrast area (12), an area in which a size of the area in an X-axial direction of the image (10) is equal to or less than a fourth predetermined value is deleted before the second extracting process.

4. The image processor (7) according to any one of claims 1 to 3, wherein the image (10) is converted to grayscale before the edge detecting process.

5. The image processor (7) according to any one of claims 1 to 4, wherein a mesh pattern in the image (10) is removed before the edge detecting process.

6. The image processor (7) according to any one of claims 1 to 5, wherein the image (10) is smoothed before the edge detecting process.

7. A method for evaluating dyeing quality of knit fabric, comprising evaluating the dyeing quality of the knit fabric (S) based on the at least one uneven area (13) which is extracted by the image processor (7) according to any one of claims 1 to 6.

8. The method according to claim 7, wherein the dyeing quality of the knit fabric (S) is evaluated based on a ratio of a width, the ratio being a ratio of a size of the at least one uneven area (13) in the course direction with respect to a size of the knit fabric (S) in the course direction.

9. The method according to claim 8, wherein the dyeing quality of the knit fabric (S) is evaluated based on an average value of the ratio of the width of the at least one uneven area (13).

10. The method according to claim 8 or 9, wherein the dyeing quality of the knit fabric (S) is evaluated based on a standard deviation of the ratio of the width of the at least one uneven area (13).

11. The method according to any one of claims 8 to 10, wherein the dyeing quality of the knit fabric (S) is evaluated based on a number of areas in which the ratio of the width is equal to or higher than a fifth predetermined value, among the at least one uneven area (13).

## Patentansprüche

1. Bildprozessor (7), der so konfiguriert ist, dass er mindestens einen ungleichmäßigen Bereich extrahiert, der ungleichmäßiger Färbung eines Bilds (10) von einer gefärbten Strickware (S) entspricht, wobei der Bildprozessor (7) Folgendes durchführt:
einen Kantenerkennungsprozess zum Erkennen einer Kante (11), die in dem Bild (10) eingeschlossen ist;
einen ersten Extraktionsprozess des Extrahierens von mindestens einem kontraststarken Bereich (12), in dem ein Gradient der Kante (11) gleich groß oder größer ist als ein vorbestimmter Wert; und
einen zweiten Extraktionsprozess des Extrahierens eines Bereichs, in dem ein Seitenverhältnis gleich groß oder größer ist als ein erster vorbestimmter Wert, als den mindestens einen ungleichmäßigen Bereich (13) unter dem mindestens einen kontraststarken Bereich (12), wobei das Seitenverhältnis ein Verhältnis einer Größe des Bereichs in einer Maschenreihenrichtung in Bezug auf eine Größe des Bereichs in einer Maschenrichtung ist, wobei
nach dem zweiten Extraktionsprozess zwei oder mehr des mindestens einen ungleichmäßigen Bereichs (13), in denen ein Abstand zwischen den zwei oder mehr des mindestens einen ungleichmäßigen Bereichs (13) in der Maschenrichtung gleich groß oder kleiner ist als ein zweiter vorbestimmter Wert, und in denen ein Abstand zwischen den zwei oder mehr des mindestens einen ungleichmäßigen Bereichs (13) in der Maschenreihenrichtung gleich groß oder kleiner ist als ein dritter vorbestimmter Wert untereinander verbunden sind, und/oder wobei
vor dem zweiten Extraktionsprozess das Bild (10) so berichtigt wird, dass die Maschenreihenrichtung der Strickware (S), die auf dem Bild (10) gezeigt wird, parallel zu einer X-Achse des Bildes (10) ist.

2. Bildprozessor (7) nach Anspruch 1, wobei in dem zweiten Extraktionsprozess ein Bereich, in dem das Seitenverhältnis gleich groß oder größer ist als der erste vorbestimmte Wert, und in dem eine Größe des Bereichs in der Maschenrichtung innerhalb eines vorbestimmten Bereichs liegt, als der mindestens eine ungleichmäßige Bereich (13) unter dem mindestens einen kontraststarken Bereich (12) extrahiert wird.

3. Bildprozessor (7) nach einem von Anspruch 1 oder 2, wobei unter dem mindestens einen kontraststarken Bereich (12) ein Bereich, in dem eine Größe des Bereichs in einer X-Achsenrichtung des Bildes (10) gleich groß oder kleiner ist als ein vierter vorbestimmter Wert, vor dem zweiten Extraktionsprozess gelöscht wird.

4. Bildprozessor (7) nach einem der Ansprüche 1 bis 3, wobei das Bild (10) vor dem Kantenerkennungsprozess in Grauskala umgewandelt wird.

5. Bildprozessor (7) nach einem der Ansprüche 1 bis 4, wobei ein Maschenmuster im Bild (10) vor dem Kantenerkennungsprozess entfernt wird.

6. Bildprozessor (7) nach einem der Ansprüche 1 bis 5, wobei das Bild (10) vor dem Kantenerkennungsprozess geglättet wird.

7. Verfahren zur Bewertung von Einfärbequalität von Strickware, umfassend
Bewerten der Einfärbequalität der Strickware (S) basierend auf dem mindestens einen ungleichmäßigen Bereich (13), der durch den Bildprozessor (7) nach einem der Ansprüche 1 bis 6 extrahiert wurde.

8. Verfahren nach Anspruch 7, wobei die Einfärbequalität der Strickware (S) basierend auf einem Verhältnis einer Breite bewertet wird, wobei das Verhältnis ein Verhältnis einer Größe des mindestens einen ungleichmäßigen Bereichs (13) in der Maschenreihenrichtung in Bezug auf eine Größe der Strickware (S) in der Maschenreihenrichtung ist.

9. Verfahren nach Anspruch 8, wobei die Einfärbequalität der Strickware (S) basierend auf einem Durchschnittswert des Verhältnisses der Breite des mindestens einen ungleichmäßigen Bereichs (13) bewertet wird.

10. Verfahren nach Anspruch 8 oder 9, wobei die Einfärbequalität der Strickware (S) basierend auf einer Standardabweichung des Verhältnisses der Breite des mindestens einen ungleichmäßigen Bereichs (13) bewertet wird.

11. Verfahren nach einem der Ansprüche 8 bis 10,
wobei die Einfärbequalität der Strickware (S) basierend auf einer Anzahl von Bereichen bewertet wird, in denen das Verhältnis der Breite gleich groß oder größer ist als ein fünfter vorbestimmter Wert unter dem mindestens einen ungleichmäßigen Bereich (13).

## Revendications

1. Processeur d'images (7) configuré pour extraire au moins une zone irrégulière correspondant à une teinture irrégulière d'une image (10) d'un tissu tricoté teint (S), le processeur d'images (7) réalisant :
un processus de détection de bord consistant à détecter un bord (11) inclus dans l'image (10) ;
un premier processus d'extraction consistant à extraire au moins une zone à contraste élevé (12) dans laquelle un gradient du bord (11) est égal ou supérieur à une valeur prédéterminée ; et
un second processus d'extraction consistant à extraire une zone dans laquelle un rapport d'aspect est égal ou supérieur à une première valeur prédéterminée en tant que la au moins une zone irrégulière (13) parmi la au moins une zone à contraste élevé (12), le rapport d'aspect étant un rapport d'une taille de la zone dans le sens des rangées de maille par rapport à une taille de la zone dans le sens des colonnes de maille, dans lequel
après le second processus d'extraction, deux ou plus de la au moins une zone irrégulière (13), dans laquelle une distance entre les deux ou plus de la au moins une zone irrégulière (13) dans le sens des colonnes de maille est égale ou inférieure à une deuxième valeur prédéterminée et dans laquelle une distance entre les deux ou plus de la au moins une zone irrégulière (13) dans le sens des rangées de maille est égale ou inférieure à une troisième valeur prédéterminée sont raccordées l'une à l'autre, et/ou dans lequel
avant le second processus d'extraction, l'image (10) est corrigée de sorte que le sens des rangées de maille du tissu tricoté (S) montré dans l'image (10) soit parallèle à un axe X de l'image (10).

2. Processeur d'images (7) selon la revendication 1, dans lequel, dans le second processus d'extraction, une zone dans laquelle le rapport d'aspect est égal ou supérieur à la première valeur
prédéterminée et dans laquelle une taille de la zone dans le sens des colonnes de maille se trouve à l'intérieur d'une plage prédéterminée est extraite en tant que la au moins une zone irrégulière (13) parmi la au moins une zone à contraste élevé (12).

3. Processeur d'images (7) selon l'une quelconque des revendications 1 ou 2, dans lequel, parmi la au moins une zone à contraste élevé (12), une zone dans laquelle une taille de la zone dans une direction axiale X de l'image (10) est égale ou inférieure à une quatrième valeur prédéterminée est supprimée avant le second processus d'extraction.

4. Processeur d'images (7) selon l'une quelconque des revendications 1 à 3, dans lequel l'image (10) est convertie en niveaux de gris avant le processus de détection de bord.

5. Processeur d'images (7) selon l'une quelconque des revendications 1 à 4, dans lequel un motif maillé dans l'image (10) est enlevé avant le processus de détection de bord.

6. Processeur d'images (7) selon l'une quelconque des revendications 1 à 5, dans lequel l'image (10) est lissée avant le processus de détection de bord.

7. Procédé d'évaluation de la qualité de teinture de tissu tricoté, comprenant
l'évaluation de la qualité de teinture du tissu tricoté (S) sur la base de la au moins une zone irrégulière (13) qui est extraite par le processeur d'images (7) selon l'une quelconque des revendications 1 à 6.

8. Procédé selon la revendication 7, dans lequel la qualité de teinture du tissu tricoté (S) est évaluée sur la base d'un rapport d'une largeur, le rapport étant un rapport d'une taille de la au moins une zone irrégulière (13) dans le sens des rangées de maille par rapport à une taille du tissu tricoté (S) dans le sens des rangées de maille.

9. Procédé selon la revendication 8, dans lequel la qualité de teinture du tissu tricoté (S) est évaluée sur la base d'une valeur moyenne du rapport de la largeur de la au moins une zone irrégulière (13).

10. Procédé selon la revendication 8 ou 9, dans lequel la qualité de teinture du tissu tricoté (S) est évaluée sur la base d'un écart-type du rapport de la largeur de la au moins une zone irrégulière (13).

11. Procédé selon l'une quelconque des revendications 8 à 10,
dans lequel la qualité de teinture du tissu tricoté (S) est évaluée sur la base d'un nombre de zones dans lesquelles le rapport de la largeur est égal ou supérieur à une cinquième valeur prédéterminée, parmi la au moins une zone irrégulière (13).
